# FASCICULE DE BREVET EUROPEEN

(11) **EP 4 341 576 B1**
(45) Date de publication et mention de la délivrance du brevet: **04.06.2025**
(21) Numéro de dépôt: 22729189.5
(22) Date de dépôt: 16.05.2022
(51) Int. Cl.: F16F 15/14

(54) **DISPOSITIF D'AMORTISSEMENT PENDULAIRE**
PENDELDÄMPFUNGSVORRICHTUNG
PENDULUM DAMPING DEVICE

(30) Priorité: 17.05.2021 FR 2105097
(43) Date de publication de la demande: 27.03.2024
(73) Titulaire: VALEO EMBRAYAGES, 80009 Amiens (FR)
(72) Inventeur: VERHOOG, Roël, 80009 AMIENS (FR)
(74) Mandataire: Valeo Powertrain Systems
(86) Numéro de dépôt international: PCT/EP2022/063145
(87) Numéro de publication internationale: WO 2022/243225

(56) Documents cités:
- EP-A1- 2 687 749
- WO-A1-2016/062475
- DE-A1- 102016 221 576
- DE-A1- 102019 215 909

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

En variante, dans une telle application, le dispositif d'amortissement pendulaire peut être intégré à un disque d'embrayage à friction ou à un convertisseur de couple hydrodynamique ou à un volant solidaire du vilebrequin ou à un double embrayage à sec ou humide ou à un simple embrayage humide ou à un groupe motopropulseur hybride.

Un tel dispositif d'amortissement pendulaire met classiquement en œuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Il est connu de la demande EP 2 758 690 ou encore de DE10 2016 221 576 1 de prolonger les pistes de roulement au-delà de la plage utile pour filtrer les acyclismes, afin de ralentir le corps pendulaire, ou afin de diminuer sa hauteur de chute radiale, de manière à réduire les bruits liés à la venue en butée de ce corps pendulaire contre le support et l'usure des moyens d'amortissement prévus pour cette venue en butée.

Il existe un besoin pour améliorer encore les performances d'un dispositif d'amortissement pendulaire.

L'invention vise à répondre à ce besoin, et elle y parvient, selon l'un de ses aspects, à l'aide d'un dispositif d'amortissement pendulaire, comprenant :
- un support mobile en rotation autour d'un axe,
- au moins un corps pendulaire, mobile par rapport au support, et,
- au moins un organe de roulement guidant le déplacement du corps pendulaire par rapport au support, cet organe de roulement coopérant avec au moins une première piste de roulement solidaire du support et avec au moins une deuxième piste de roulement solidaire du corps pendulaire,
l'une au moins de la première et de la deuxième piste de roulement ayant une forme telle que le parcours du centre de gravité du corps pendulaire lors de son déplacement par rapport au support comprenne:
- une première portion disposée de part de d'autre d'une position de repos, cette première portion ayant une forme permettant la filtration d'une valeur d'ordre des oscillations de torsion par le corps pendulaire le long de cette première portion, et
- deux deuxièmes portions, disposée chacune au-delà d'une extrémité de la première portion, chaque deuxième portion ayant une forme permettant la filtration d'une fréquence par le corps pendulaire le long d'une de ces deuxièmes portions.

L'invention permet d'utiliser le prolongement du parcours du centre de gravité du corps pendulaire dans un but additionnel de ce qui est divulgué dans la demande EP 2 758 690. Le parcours supplémentaire du centre de gravité du corps pendulaire le long des deuxièmes portions permet de compléter le filtrage déjà fourni lors du parcours le long de la première portion. La présence de ces deuxièmes portions peut permettre d'augmenter la capacité en couple du dispositif d'amortissement pendulaire, c'est-à-dire le couple acyclique maximal qu'il peut ôter, d'une valeur comprise entre 5 et 10% de cette capacité en couple en l'absence de ces deuxièmes portions.

Le débattement d'un corps pendulaire peut rester globalement constant sur l'ensemble des vitesses de rotation du support à l'exception d'une plage réduite dans laquelle ce débattement est plus important. Le parcours du centre de gravité du corps pendulaire lors de son déplacement par rapport au support peut n'utiliser que la première portion à l'exception des cas dans lesquels la vitesse de rotation du support se trouve dans cette plage réduite, cas pour lesquels ce parcours utilise la première portion et chaque deuxième portion. La plage réduite pour laquelle le parcours utilise la première portion et chaque deuxième portion peut être centrée autour de la valeur de la vitesse de rotation du support pour laquelle le débattement du corps pendulaire est maximal. L'amplitude de cette plage de valeurs peut correspondre à 20% de la valeur de cette vitesse de rotation, soit 10% de chaque côté de cette valeur, et/ou à 200 tr/min. Cette valeur de vitesse de rotation est par exemple de 1100 tr/min.

La fréquence filtrée par le corps pendulaire le long d'une deuxième portion peut sensiblement correspondre à une des fréquences filtrées pour la valeur d'ordre considérée lors du parcours du corps pendulaire le long de la première portion pour cette plage de vitesses réduite. Il s'agit par exemple de la fréquence pour la vitesse de 1100 tr/min.

A titre d'exemple, le centre de gravité du corps pendulaire ne parcourt que la première portion de la piste de roulement pour les vitesses de rotation du support comprises entre 800 tr/min et 7000 tr/min, à l'exception de la plage de vitesses [1000 tr/min-1200 tr/min] pour laquelle il parcourt la première portion et chaque deuxième portion.

Au sens de la présente demande :
- « axialement » signifie « parallèlement à l'axe de rotation »,
- « radialement » signifie « le long d'une droite appartenant à un plan orthogonal à l'axe de rotation et coupant cet axe de rotation»,
- « angulairement » ou « circonférentiellement » signifie « autour de l'axe de rotation »,
- « orthoradialement » signifie « perpendiculairement à une direction radiale »,
- « solidaire » signifie « rigidement couplé»,
- l'ordre d'excitation d'un moteur thermique est égal au nombre d'explosions de ce moteur par tour de vilebrequin,
- la position de repos d'un corps pendulaire est celle dans laquelle ce corps pendulaire est centrifugé sans être soumis à des oscillations de torsion provenant des acyclismes du moteur thermique. Pour cette position de repos, la valeur de l'abscisse curviligne du centre de gravité du corps pendulaire est nulle,
- une valeur d'ordre est filtrée par le dispositif d'amortissement pendulaire lorsque le rapport entre : l'amplitude d'une oscillation de torsion à cette valeur d'ordre en présence du dispositif d'amortissement pendulaire, et cette même amplitude en l'absence du dispositif d'amortissement pendulaire est inférieur à 0,2, notamment inférieur à 0,1, et
- la longueur d'une portion de piste de roulement désigne la dimension curviligne mesurée le long de celle-ci.

Chaque extrémité de la première portion du parcours du corps pendulaire peut constituer un point de rebroussement pour le déplacement du corps pendulaire en dehors de la plage de vitesses réduite.

La réunion de la première portion et des deux deuxièmes portions peut constituer le parcours du centre de gravité du corps pendulaire lors de son déplacement par rapport au support, à l'exception le cas échéant de zones de transition entre la première portion et chaque deuxième portion. Ces zones de transition peuvent être ponctuelles, le cas échéant. Dans ce cas, chaque extrémité de la deuxième portion en éloignement de la première portion constitue par exemple une position de butée pour le déplacement par rapport au support du corps pendulaire.

La longueur cumulée des deuxièmes portions peut représenter entre 5% et 10%, notamment entre 10% et 30%, de la longueur totale du parcours du centre de gravité du corps pendulaire. On ménage ainsi via les deuxièmes portions une zone de freinage du corps pendulaire dont la longueur n'affecte pas les performances de filtrage provenant largement de la première portion.

Dans tout ce qui précède, la transition entre la première portion et chaque deuxième portion peut être doublement dérivable. De telles zones de transition peuvent permettre des transitions sans à-coup.

Au moins une deuxième portion peut être rectiligne. Chaque deuxième portion est par exemple, dans un plan orthogonal à l'axe de rotation du support, une droite partant de l'extrémité de la première portion et orientée radialement vers l'axe de rotation.

En variante, au moins une deuxième portion peut avoir son rayon de courbure maximal inférieur au rayon de courbure minimal de la première portion. Le rayon de courbure de la première portion est par exemple constant, tout comme l'est celui de la deuxième portion et cette valeur constante pour la première portion est supérieure à la valeur constante pour la deuxième portion. En variante, le rayon de courbure varie sur l'une et/ou l'autre de la première et de la deuxième portion et la condition précitée reste vérifiée.

En variante encore, au moins une deuxième portion peut définir une portion de spirale.

Dans tout ce qui précède, les deux deuxièmes portions peuvent avoir une forme identique. Les deux deuxièmes portions ont par exemple la même longueur et les deux extrémités de la première portion peuvent être symétriques par rapport à la position de repos Dans tout ce qui précède, le parcours précité du centre de gravité du corps pendulaire peut être obtenu lorsque l'une au moins de la première et de la deuxième piste de roulement comprend :
- une première portion disposée de part de d'autre d'une position de repos de l'organe de roulement, cette première portion ayant une forme permettant la filtration d'une valeur d'ordre des oscillations de torsion par le corps pendulaire lorsque l'organe de roulement roule le long de cette première portion, et
- deux deuxièmes portions, disposée chacune au-delà d'une extrémité de la première portion, chaque deuxième portion ayant une forme permettant la filtration d'une fréquence par le corps pendulaire lorsque l'organe de roulement roule le long d'une de ces deuxièmes portions.

Chaque première piste de roulement présente par exemple une telle première portion et deux telles deuxièmes portions, et chaque deuxième piste de roulement présente par exemple une telle première portion et deux telles deuxièmes portions.

Tout ce qui a été mentionné ci-dessus par rapport au parcours du centre de gravité du corps pendulaire lors de son déplacement par rapport au support peut encore s'appliquer à la première portion et aux deuxièmes portions de la première piste de roulement et/ou s'appliquer à la première portion et aux deuxièmes portions de la deuxième piste de roulement, dont par exemple :
- le fait que, pour cette piste de roulement, la longueur cumulée des deuxièmes portions puisse représenter entre 5% et 10%, notamment entre 10% et 30%, de la longueur totale de cette piste de roulement,
- le fait que la deuxième portion de cette piste de roulement soit rectiligne, en portion de spirale ou avec un rayon de courbure différent de celui de la première portion,
- le fait que la réunion de la première portion et des deux deuxièmes portions puisse constituer cette piste de roulement,
- le fait que l'organe de roulement n'utilise que la première portion de cette piste de roulement à l'exception des cas dans lesquels la vitesse de rotation du support se trouve dans la plage réduite mentionnée ci-dessus,
- le fait que pour cette piste de roulement, les deuxièmes portions puissent avoir la même forme et que cette piste de roulement puisse être symétrique par rapport à la position de repos de l'organe de roulement sur cette piste de roulement.

Dans tout ce qui précède, l'organe de roulement peut présenter une surface latérale de roulement qui roule alternativement sur une première piste de roulement et sur une deuxième piste de roulement ou dont une zone roule sur une première piste de roulement et dont une ou plusieurs autres zones roulent sur des deuxièmes pistes de roulement. Cette surface latérale peut subir un traitement à l'aide de la meule, ce traitement étant encore appelé « usinage par abrasion ». En variante, ou en complément, cet organe de roulement présente au moins une surface axiale en regard d'une masse pendulaire et, cette surface axiale étant en tout ou partie traitée à l'aide d'une meule. Dans ce dernier cas, la surface de la masse pendulaire en regard de la surface axiale de l'organe de roulement en tout ou partie traitée à l'aide d'une meule peut être également en tout ou partie traitée à l'aide d'une meule. Il peut s'agir de la même meule pour ces deux surfaces axialement en regard.

Dans tout ce qui précède, chaque organe de roulement est par exemple un rouleau. Chaque organe de roulement est par exemple un rouleau réalisé en acier. Le rouleau peut être creux ou plein. Ce rouleau peut ne présenter qu'un unique diamètre, tout le long de son axe longitudinal ou plusieurs diamètres successifs, pouvant être qualifié de « rouleau étagé ». Ce rouleau présente par exemple, longitudinalement parlant, des portions de diamètre différent, par exemple une portion centrale d'un premier diamètre entourée longitudinalement parlant par deux portions d'un deuxième diamètre, inférieur au premier diamètre. En variante encore, le rouleau présente des portions de diamètre différent et variant de façon monotone qui se succèdent, longitudinalement parlant.

Dans un exemple de mise en œuvre, le support du dispositif d' amortissement pendulaire est unique et le corps pendulaire comprend deux masses pendulaires respectivement disposées axialement d'un côté du support, ces deux masses pendulaires étant solidarisées entre elles par au moins un organe de liaison, la surface latérale de roulement de l'organe de roulement roulant sur une unique première piste de roulement et sur une unique deuxième piste de roulement définie par l'organe de liaison. L'organe de liaison comprend par exemple une entretoise disposée entre les deux masses pendulaires et définissant la deuxième piste de roulement. Une portion du contour de cette entretoise définit par exemple la deuxième piste de roulement. En variante, un revêtement peut être déposé sur cette portion du contour de l'entretoise pour former la deuxième piste de roulement. Une telle entretoise est par exemple emmanchée en force via chacune de ses extrémités axiales dans une ouverture ménagée dans une des masses pendulaires. En variante, l'entretoise peut être soudée ou vissée ou rivetée via ses extrémités axiales sur chacune de la première et de la deuxième masse pendulaire.

Dans cet exemple de mise en œuvre, l'organe de roulement roule via une même surface latérale alternativement sur la première piste de roulement et sur la deuxième piste de roulement. Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

La première et la deuxième masse pendulaire sont par exemple rigidement reliées entre elles par un ou plusieurs organes de liaison.

Selon cet exemple de mise en œuvre, lorsque le déplacement de chaque corps pendulaire par rapport au support est guidé par au moins deux organes de roulement, notamment exactement deux organes de roulement, deux organes de liaison coopérant chacune avec un organe de roulement peuvent être prévus. En variante, un seul organe de liaison peut être prévu, et cet organe de liaison unique peut comprendre une entretoise unique définissant deux deuxièmes pistes de roulement distinctes, l'une de ces deuxièmes pistes coopérant avec l'un des organes de roulement et l'autre de ces deuxièmes pistes coopérant avec l'autre des organes de roulement.

Toujours selon cet exemple de mise en œuvre, chaque organe de roulement peut être reçu dans une fenêtre du support recevant déjà un organe de liaison et ne recevant aucun autre organe de roulement. Cette fenêtre est par exemple définie par un contour fermé dont une portion définit la première piste de roulement solidaire du support qui coopère avec cet organe de roulement.

Selon un autre exemple de mise en œuvre, le support du dispositif d'amortissement pendulaire est toujours unique et le corps pendulaire comprend deux masses pendulaires respectivement disposées axialement d'un côté du support, ces deux masses pendulaires étant solidarisées entre elles par au moins un organe de liaison, et la surface latérale de l'organe de roulement roule via une première zone sur une unique première piste de roulement et via deux deuxièmes zones sur deux deuxièmes pistes de roulement définies respectivement par une des masses pendulaires du corps pendulaire.

Selon cet autre exemple de mise en œuvre, la zone de la surface latérale de roulement qui roule sur la première piste de roulement ne roule pas en alternance sur une deuxième piste de roulement. La première zone de la surface latérale de roulement est ici axialement disposée entre les deuxièmes zones de la surface latérale de roulement. Le cas échéant, la première zone de la surface de roulement a un rayon différent du rayon des deuxièmes zones de la surface de roulement. Selon cet autre exemple de mise en œuvre de l'invention, chaque masse pendulaire peut présenter une ouverture dont une partie du contour définit une de ces deuxièmes pistes de roulement.

Toujours selon cet autre exemple de mise en œuvre, chaque organe de liaison regroupe par exemple plusieurs rivets, et cet organe de liaison est reçu dans une fenêtre du support, tandis que l'organe de roulement est reçu dans une ouverture du support, distincte d'une fenêtre recevant un organe de liaison. Chaque organe de liaison peut en variante être un rivet.

Selon cet exemple de mise en œuvre, lorsque deux organes de roulement guident le déplacement du corps pendulaire par rapport au support, chaque organe de roulement peut coopérer avec une première piste de roulement dédiée à cet organe de roulement et avec deux deuxièmes pistes de roulement dédiées à cet organe de roulement.

Chaque organe de roulement peut alors comprendre successivement axialement:
- une portion disposée dans une ouverture de la première masse pendulaire et coopérant avec la deuxième piste de roulement formée par une partie du contour de cette ouverture,
- une portion disposée dans une ouverture du support et coopérant avec la première piste de roulement formée par une partie du contour de cette ouverture, et
- une portion disposée dans une ouverture de la deuxième masse pendulaire et coopérant avec la deuxième piste de roulement formée par une partie du contour de cette ouverture.

Selon encore un autre exemple de mise en œuvre, le dispositif d'amortissement pendulaire peut encore être autre qu'un dispositif à support unique, comprenant par exemple deux supports axialement décalés et solidaires entre eux, le corps pendulaire comprenant au moins une masse pendulaire disposée axialement entre les deux supports. Le corps pendulaire comprend par exemple plusieurs masses pendulaires solidarisées entre elles. Toutes ces masses pendulaires d'un même corps pendulaire peuvent être disposées axialement entre les deux supports. En variante seule(s) certaine(s) masse(s) pendulaire(s) du corps pendulaire s'étend(ent) axialement entre les deux supports, d'autre(s) masse(s) pendulaire(s) de ce corps pendulaire s'étendant axialement au-delà de l'un ou de l'autre des supports. L'organe de roulement peut alors coopérer avec deux premières pistes de roulement, chacune étant solidaire d'un support respectif, et avec une seule deuxième piste de roulement solidaire de la masse pendulaire. Similairement à ce qui a été mentionné précédemment, la surface latérale de roulement peut alors présenter deux premières zones roulant sur une première piste de roulement respective et une deuxième zone de roulement roulant sur la deuxième piste de roulement. L'une au moins, notamment chaque, première zone et/ou la deuxième zone de la surface latérale de roulement peut être traitée à l'aide d'une meule.

Selon cet encore autre exemple de mise en œuvre, chaque première piste de roulement est par exemple définie par une partie du contour d'une ouverture ménagée dans un support respectif et la deuxième piste de roulement est définie par une partie du contour d'une ouverture ménagée dans la masse pendulaire.

Le dispositif comprend par exemple un nombre de corps pendulaires compris entre deux et huit, notamment trois, quatre, cinq ou six corps pendulaires. Chacun de ces corps pendulaires peut filtrer, lors de son déplacement par rapport au support une valeur d'ordre prédéfinie.

Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Dans tout ce qui précède, dans le dispositif d'amortissement pendulaire, toutes les premières pistes de roulement solidaires du support peuvent avoir exactement la même forme entre elles et/ou toutes les deuxièmes pistes de roulement solidaires du corps pendulaires peuvent avoir exactement la même forme entre elles.

Dans tout ce qui précède encore, deux corps pendulaires circonférentiellement adjacents peuvent être reliés entre eux par au moins un organe de rappel élastique, par exemple selon l'enseignement des demandes EP 3 153 741, EP 3 380 750, EP 3 190 310. En variante, deux corps pendulaires circonférentiellement voisins peuvent être reliés par une connexion impliquant un frottement axial, par exemple selon l'enseignement de la demande EP 3 332 147.

Dans tout ce qui précède, les première(s) et deuxième(s) pistes de roulement peuvent avoir des formes choisies pour que le corps pendulaire soit déplacé par rapport au support à la fois en translation autour d'un axe fictif parallèle à l'axe de rotation du support, et également en rotation sur lui-même, notamment en rotation autour de son centre de gravité.

En variante, les première(s) et deuxième(s) pistes de roulement peuvent avoir des formes choisies pour que le corps pendulaire soit déplacé par rapport au support uniquement en translation autour d'un axe fictif parallèle à l'axe de rotation du support.

L'invention a encore pour objet, selon un autre de ses aspects, un composant pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de groupe motopropulseur hybride, ou un disque d'embrayage à friction, comprenant un dispositif d'amortissement pendulaire défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Dans le cas où le dispositif est intégré à un volant solidaire du vilebrequin, le support peut être solidaire de ce volant.

L'invention a encore pour objet, selon un autre de ses aspects, un système de transmission pour véhicule hybride, comprenant :
- le composant ci-dessus, étant un double embrayage, à sec ou humide,
- une boîte de vitesses, comprenant des pignons, définissant des rapports de boîte, et- un essieu avant et un essieu arrière.

L'invention a encore pour objet, selon un autre de ses aspects un groupe motopropulseur de véhicule hybride, comprenant :
- le système de transmission ci-dessus, et
- une machine électrique tournante de propulsion, l'arbre de la machine électrique tournante étant solidaire en rotation :
- d'un arbre d'entrée de la boîte de vitesses, ou
- de l'arbre de sortie de la boîte de vitesses, ou
- de pignons fous de la boîte de vitesses, ou
- de l'essieu avant ou de l'essieu arrière, ou
- du vilebrequin du moteur thermique du véhicule,

La machine électrique tournante a par exemple une tension nominale d'alimentation de 48V, ou une tension nominale d'alimentation supérieure à 200V, notamment à 300V.

L'invention pourra être mieux comprise à la lecture de la description qui va suivre d'exemples non limitatifs et à l'examen du dessin annexé sur lequel :
- la figure 1 représente un dispositif d'amortissement pendulaire auquel s'applique l'invention,
- la figure 2 représente un détail du dispositif d'amortissement pendulaire de la figure 1,
- la figure 3 représente un autre exemple de dispositif d'amortissement pendulaire auquel s'applique l'invention,
- la figure 4 représente encore un autre exemple de dispositif d'amortissement pendulaire auquel s'applique l'invention, et
- la figure 5 représente le parcours du centre de gravité d'un corps de pendulaire lors de son déplacement par rapport au support, selon un exemple de mise en œuvre de l'invention.

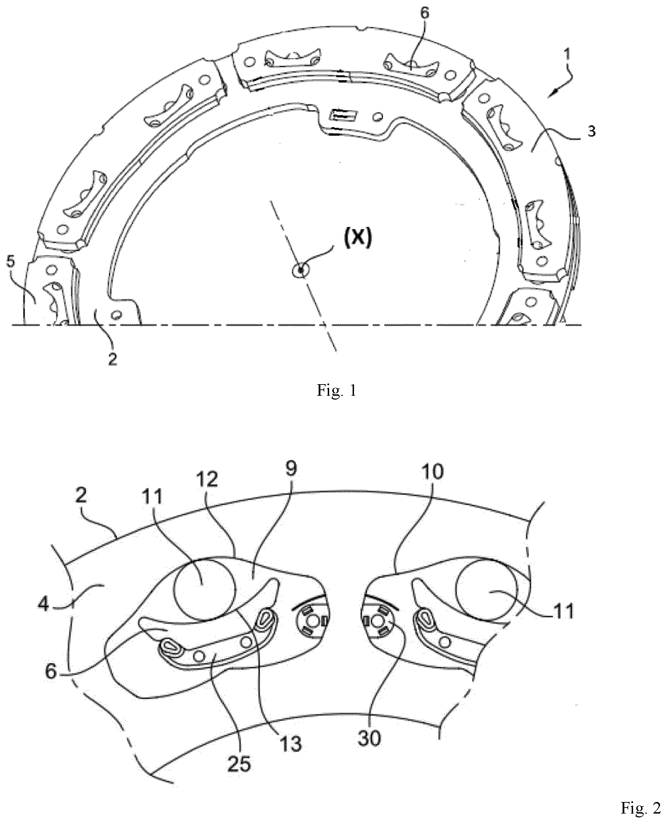

On a représenté sur la figure 1 un exemple de dispositif d'amortissement pendulaire 1. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique, un volant solidaire du vilebrequin, un double embrayage à sec ou humide, un simple embrayage humide, un composant de groupe motopropulseur hybride, ou un disque d'embrayage à friction.

Ce composant peut faire partie d'un groupe motopropulseur d'un véhicule automobile, ce dernier comprenant un moteur thermique notamment à trois ou quatre cylindres. Il s'agit par exemple d'un groupe motopropulseur de véhicule hybride.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un système d'amortissement de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple de la figure 1, six corps pendulaires 3 sont prévus, étant répartis de façon uniforme sur le pourtour de l'axe X.

Le support 2 du dispositif d'amortissement 1 peut être constitué par :
- un élément d'entrée du système d'amortissement de torsion,
- un élément de sortie, ou
- un élément de phasage intermédiaire disposé entre deux séries de ressort du système d'amortissement, ou
- un élément lié en rotation à un des éléments précités et distinct de ces derniers, étant alors par exemple un support propre au dispositif 1.

Le support 2 est notamment une rondelle de guidage ou une rondelle de phasage.

Le support 2 peut encore être autre, tel qu'un flasque.

Dans l'exemple considéré, le support 2 présente globalement une forme d'anneau comportant deux côtés opposés 4 qui sont ici des faces planes.

Comme on peut le deviner sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Les organes de liaison 6, comprennent chacun une entretoise, et sont dans l'exemple considéré décalés angulairement. Dans une variante non représentée, un unique organe de liaison peut être utilisé pour solidariser les deux masses pendulaires. Une unique entretoise est alors prévue entre les deux masses pendulaires 5 d'un corps pendulaire 3.

Dans l'exemple de la figure 1, chaque extrémité d'une entretoise est emmanchée en force dans une ouverture ménagée dans une des masses pendulaires 5 du corps pendulaire 3, de manière à solidariser entre elles ces deux masses pendulaires 5. Dans cet exemple, l'organe de liaison 6 est alors confondu avec l'entretoise. Dans d'autres exemples, l'entretoise d'un organe de liaison 6 est soudée, rivetée ou vissée avec chaque masse pendulaire 5 d'un corps pendulaire 3.

Chaque organe de liaison 6 s'étend en partie dans une fenêtre 9 ménagée dans le support. Dans l'exemple considéré, la fenêtre 9 définit un espace vide à l'intérieur du support, cette fenêtre étant délimitée par un contour fermé 10.

Le dispositif 1 comprend encore dans l'exemple considéré des organes de roulement 11 guidant le déplacement des corps pendulaires 3 par rapport au support 2. Les organes de roulement 11 sont ici des rouleaux, comme on le verra par la suite. Dans l'exemple des figures 1 et 2, chaque rouleau conserve un diamètre sensiblement constant sur toute sa longueur.

Comme on peut le voir sur la figure 2, le dispositif 1 peut également comprendre des organes d'amortissement de butée 25 aptes à venir simultanément en contact avec un organe de liaison 6 et avec le support 2 dans certaines positions relatives du support 2 et des masses pendulaires 3, telles que les venues en butée à l'issue d'un déplacement depuis la position de repos pour filtrer une oscillation de torsion ou lors d'une chute radiale du corps pendulaire 3. Chaque organe d'amortissement de butée 25 est ici solidaire d'un corps pendulaire 3, étant monté sur chaque corps pendulaire 3 et disposé de manière à s'interposer radialement entre un organe de liaison 6 de ce corps pendulaire 3 et le contour 10 de l'ouverture 9.

Dans l'exemple décrit, le mouvement par rapport au support 2 de chaque corps pendulaire 3 est guidé par deux organes de roulement 11, chacun d'entre eux coopérant dans l'exemple des figures 1 et 2 avec l'un des organes de liaison 6 du corps pendulaire 3.

Comme on peut le voir sur la figure 2, sur laquelle chaque corps pendulaire 3 est au repos, chaque organe de roulement 11 coopère par roulement avec une seule première piste de roulement 12 solidaire du support 2, et avec une seule deuxième piste de roulement 13 solidaire du corps pendulaire 3 pour guider le déplacement du corps pendulaire en translation autour d'un axe fictif parallèle à l'axe de rotation X du support 2 et, le cas échéant, en rotation, notamment en rotation autour du centre de gravité dudit corps pendulaire 3.

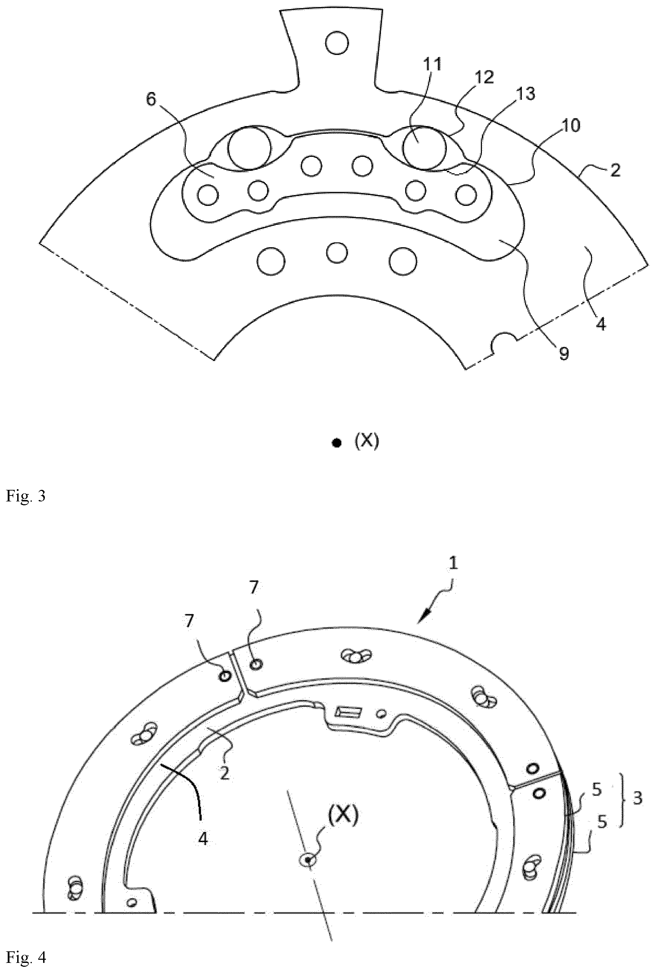

Dans l'exemple considéré, chaque deuxième piste de roulement 13 est formée par une portion du bord radialement extérieur d'une entretoise d'un organe de liaison 6. Dans l'exemple de la figure 3, un unique organe de liaison 6 avec une unique entretoise est prévu pour tout le corps pendulaire 3, et une portion du bord radialement extérieur de cette entretoise définit une deuxième piste de roulement 13 tandis qu'une autre portion de son bord radialement extérieur définit une autre deuxième piste de roulement 13.

Chaque première piste de roulement 12 est définie par une partie du contour d'une fenêtre 9 ménagée dans le support 2 et recevant l'un des organes de liaison 6.

Chaque première piste de roulement 12 est ainsi disposée radialement en regard d'une deuxième piste de roulement 13, de sorte qu'une même surface latérale de roulement d'un organe de roulement 11 roule alternativement sur la première piste de roulement 12 et sur la deuxième piste de roulement 13. La surface latérale de roulement de l'organe de roulement est ici un cylindre de rayon constant.

On observe encore, sur la figure 2, que des pièces d'interposition 30, encore appelées « patin » peuvent être prévues. Un ou plusieurs patins 30 sont par exemple portés de manière fixe par chaque masse pendulaire 5.

Le déplacement de chaque corps pendulaire 3 par rapport au support 2 s'effectue depuis la position de repos des figures 1 et 2 en direction de positions de butée qui encadrent circonférentiellement la position de repos. La distance curviligne mesurée le long d'une première 12 ou deuxième 13 piste de roulement entre les deux positions occupées par l'organe de roulement 11 dans ces positions de butée respectives définit la longueur de ladite piste de roulement, ces positions de butée définissant entre elles toute ladite piste de roulement.

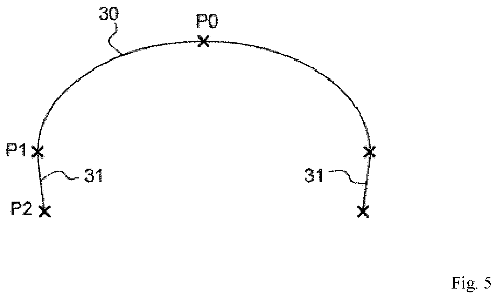

La figure 5 représente le parcours du centre de gravité du corps pendulaire 3 lors de son déplacement par rapport au support 2 selon un exemple de mise en œuvre de l'invention. Ce parcours peut correspondre, exactement ou non, à la forme de chaque première piste de roulement 12 associée à ce corps pendulaire.

Dans cet exemple de la figure 5, qui s'applique au dispositifs d'amortissement pendulaire des figures 1 à 3, chacune première piste de roulement 12 et chaque deuxième piste de roulement 13 comprend :
- une première portion s'étendant de part et d'autre de la position de repos de l'organe de roulement 11 sur cette piste entre deux extrémités, et
- deux deuxièmes portions, disposées chacune au-delà d'une extrémité de la première portion, et encadrant cette première portion.

Ces pistes de roulement 12 et 13 permettent de guider le déplacement du corps pendulaire 3 par rapport au support 2 de manière à ce que le parcours du centre de gravité de ce corps pendulaire 3 comprenne :
- une première portion 30 s'étendant de part et d'autre de la position de repos P0 de ce centre de gravité du corps pendulaire 3 entre deux extrémités P1, cette première portion 30 correspondant au roulement des organes de roulement 11 associés à ce corps pendulaire 3 sur les premières portions respectives des premières et deuxièmes pistes de roulement, et
- deux deuxièmes portions 31, disposées chacune au-delà d'une extrémité P1 de la première portion 30, et encadrant cette première portion 30 jusqu'à une extrémité P2, ces deuxièmes portions 31 correspondant au roulement des organes de roulement 11 associés à ce corps pendulaire sur les deuxièmes portions respectives des premières et deuxièmes pistes de roulement.

Chaque organe de roulement 11 parcourt par exemple uniquement la première portion de chaque piste de roulement hormis pour une plage de valeurs réduite pour la vitesse de rotation du support 2, par exemple pour la plage [1000 tr/min -1200 tr/min]. Dans cette plage de vitesses réduite, chaque organe de roulement 11 se déplace par exemple le long de la première portion et également le long de chaque deuxième portion. Les extrémités de chaque deuxième portion correspondent par exemple alors à une position de butée pour le corps pendulaire 3 par rapport au support 2.

La première portion des pistes de roulement présente dans les exemples considérés une forme permettant la filtration d'une valeur d'ordre par le corps pendulaire 3, par exemple l'ordre d'excitation du moteur thermique ou une valeur légèrement supérieure à cet ordre d'excitation pour tenir compte des non-linéarités, lors de son parcours le long de la première portion 30, tandis que chaque deuxième portion des pistes de roulement présente dans ces exemples une forme permettant la filtration d'une fréquence par le corps pendulaire 3 lors de son parcours le long d'une deuxième portion 31.

La figure 5 correspond à des premières et deuxièmes pistes de roulement respectivement constituées par la réunion d'une première portion et de deux deuxièmes portions mais, dans d'autres exemples, les deuxièmes portions de ces pistes de roulement pourraient encore être prolongées par des troisièmes portions et/ou une zone de transition pourrait exister entre la première portion et chaque deuxième portion d'une piste de roulement. Dans l'exemple de la figure 5, chaque transition de la première portion à une deuxième portion d'une piste de roulement est doublement dérivable.

Dans l'exemple de la figure 5 la longueur cumulée des deux deuxièmes portions d'une piste de roulement 12 ou 13 représente entre 5% et 30%, notamment entre 10% et 30% , de la longueur totale de cette piste de roulement, cette dernière étant mesurée entre ses deux extrémités dans cet exemple.

Dans l'exemple de la figure 5, chaque piste de roulement est symétrique par rapport à la position de repos de l'organe de roulement 11 sur cette piste de roulement. Ainsi, chaque deuxième portion présente dans cet exemple la même forme et la même longueur pour une même piste de roulement.

Dans l'exemple de la figure 5, chaque deuxième portion de la première piste de roulement 12 est, dans le plan de cette figure 5, une droite partant de l'extrémité de la première portion et orientée radialement vers l'axe de rotation (X) du support 2, tout comme l'est la deuxième portion 31 du parcours du centre de gravité du corps pendulaire 3. L'invention n'est pas limitée à cet exemple.

Ainsi, à titre de variante, chaque deuxième portion de la première piste de roulement 12, et/ou chaque deuxième portion 31 du parcours du centre de gravité du corps pendulaire 3, peut présenter un rayon de courbure constant inférieur au rayon de courbure constant de la première portion, ce rayon de courbure étant identique d'une deuxième portion à l'autre de la première piste de roulement 12, ou d'une deuxième portion à l'autre du parcours du centre de gravité.

Encore à titre de variante, chaque deuxième portion de la première piste de roulement 12, et/ou chaque deuxième portion 31 du parcours du centre de gravité du corps pendulaire 3, peut définir une portion de spirale, l'équation de cette portion de spirale étant identique d'une deuxième portion à l'autre de la première piste de roulement 12, ou d'une deuxième portion à l'autre du parcours du centre de gravité.

Encore à titre de variante, seule la première piste de roulement 12 présente une première et deux deuxièmes portions telles que décrit ci-dessus, la deuxième piste de roulement 13 présentant notamment une même forme sur toute sa longueur.

L'invention n'est pas limitée à des dispositifs d'amortissement pendulaires 1 selon les figures 1 à 3. En particulier, l'invention peut être mise en œuvre dans un dispositif d'amortissement pendulaire 1 selon l'exemple représenté sur la figure 4. Dans ce cas, les organes de liaison entre deux masses pendulaires 5 d'un corps pendulaire 3 sont des rivets 7. Les deuxièmes pistes de roulement 13 sont alors formées par des parties du contour d'ouverture ménagées dans des masses pendulaires 5.

L'invention peut encore s'appliquer lorsque les corps pendulaires 3 sont des corps roulant chacun dans une cavité ménagée dans le support 2, et dont la paroi définit la première piste de roulement 12 associée à ce corps pendulaire 3. Aucun organe de roulement et aucune deuxième piste de roulement n'est alors prévu. Dans ce dernier cas, la première piste de roulement a une forme telle que le parcours du centre de gravité du corps pendulaire 3 lors de son déplacement par rapport au support 2 comprenne:
- une première portion disposée de part de d'autre d'une position de repos, cette première portion ayant une forme permettant la filtration d'une valeur d'ordre des oscillations de torsion par le corps pendulaire le long de cette première portion, et
- deux deuxièmes portions, disposée chacune au-delà d'une extrémité de la première portion, chaque deuxième portion ayant une forme permettant la filtration d'une fréquence par le corps pendulaire le long d'une de ces deuxièmes portions.

## Revendications

1. Dispositif d'amortissement pendulaire (1), comprenant :
- un support (2) mobile en rotation autour d'un axe (X),
- au moins un corps pendulaire (3), mobile par rapport au support (2), et,
- au moins un organe de roulement (11) guidant le déplacement du corps pendulaire (3) par rapport au support (2), cet organe de roulement (11) coopérant avec au moins une première piste de roulement (12) solidaire du support (2) et avec au moins une deuxième piste de roulement (13) solidaire du corps pendulaire (3),
l'une au moins de la première (12) et de la deuxième piste (13) de roulement ayant une forme telle que le parcours du centre de gravité du corps pendulaire (3) lors de son déplacement par rapport au support (2) comprenne:
- une première portion (30) disposée de part de d'autre d'une position de repos (P0), cette première portion (30) ayant une forme permettant la filtration d'une valeur d'ordre des oscillations de torsion par le corps pendulaire (3) le long de cette première portion (30), et
- deux deuxièmes portions (31), disposée chacune au-delà d'une extrémité (P1) de la première portion (30), chaque deuxième portion (31) ayant une forme permettant la filtration d'une unique fréquence par le corps pendulaire (3) le long d'une de ces deuxièmes portions (31).

2. Dispositif selon la revendication 1, la réunion de la première portion (30) et des deux deuxièmes portions (31) constituant le parcours du centre de gravité du corps pendulaire (3) lors de son déplacement par rapport au support (2).

3. Dispositif selon la revendication 1 ou 2, la longueur cumulée des deuxièmes portions représentant entre 5% et 30%, notamment entre 10 et 30%, de la longueur totale de ce parcours du centre de gravité du corps pendulaire (3).

4. Dispositif selon l'une quelconque des revendications précédentes, la transition entre la première portion et chaque deuxième portion étant doublement dérivable.

5. Dispositif selon l'une quelconque des revendications précédentes, au moins une deuxième portion étant rectiligne.

6. Dispositif selon l'une quelconque des revendications 1 à 4, au moins une deuxième portion ayant son rayon de courbure maximal inférieur au rayon de courbure minimal de la première portion.

7. Dispositif selon l'une quelconque des revendications 1 à 4, au moins une deuxième portion définissant une portion de spirale.

8. Dispositif selon l'une quelconque des revendications précédentes, chaque deuxième portion ayant une forme identique.

9. Dispositif selon l'une quelconque des revendications précédentes, le centre de gravité du corps pendulaire (3) parcourant la première portion (30) et chaque deuxième portion (31) uniquement pour une plage de vitesses centrée autour de la valeur de la vitesse de rotation du support (2) pour laquelle le débattement du corps pendulaire est maximal, l'amplitude de cette plage de vitesses correspondant notamment à 20% de la valeur de cette vitesse de rotation.

10. Dispositif selon l'une quelconque des revendications précédentes, le support (2) du dispositif d'amortissement pendulaire étant unique et le corps pendulaire (3) comprenant deux masses pendulaires (5) respectivement disposées axialement d'un côté du support (2), ces deux masses pendulaires (5) étant solidarisées entre elles par au moins un organe de liaison (6), l'organe de roulement (11) roulant sur une unique première piste de roulement (12) et sur une unique deuxième piste de roulement (13) définie par l'organe de liaison (6).

11. Dispositif selon l'une quelconque des revendications 1 à 9, le support (2) du dispositif d'amortissement pendulaire étant unique et le corps pendulaire (3) comprenant deux masses pendulaires (5) respectivement disposées axialement d'un côté du support (2), ces deux masses pendulaires étant solidarisées entre elles par au moins un organe de liaison (6), l'organe de roulement (11) roulant via une première zone sur une unique première piste de roulement (12) et via deux deuxièmes zones sur deux deuxièmes pistes de roulement (13) définies respectivement par une des masses pendulaires (5) du corps pendulaire.

12. Dispositif selon l'une quelconque des revendications précédentes, la première (12) et deuxième (13) pistes de roulement ayant des formes telles que le corps pendulaire (3) soit déplacé par rapport au support (2) à la fois :
- en translation autour d'un axe fictif parallèle à l'axe de rotation (X) du support et,
- également en rotation sur lui-même,

13. Dispositif selon l'une quelconque des revendications précédentes, l'une au moins de la première (12) et de la deuxième (13) piste de roulement, notamment chaque première (12) et chaque deuxième (13) piste de roulement, comprenant :
- une première portion disposée de part de d'autre d'une position de repos de l'organe de roulement (11), cette première portion ayant une forme permettant la filtration d'une valeur d'ordre des oscillations de torsion par le corps pendulaire (3) lorsque l'organe de roulement (11) roule le long de cette première portion, et
- deux deuxièmes portions, disposée chacune au-delà d'une extrémité de la première portion, chaque deuxième portion ayant une forme permettant la filtration d'une fréquence par le corps pendulaire (3) lorsque l'organe de roulement (11) roule le long d'une de ces deuxièmes portions.

14. Composant pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de groupe motopropulseur hybride, ou un disque de friction, comprenant un dispositif d'amortissement pendulaire selon l'une quelconque des revendications précédentes.

## Patentansprüche

1. Pendeldämpfungsvorrichtung (1), umfassend:
- einen Träger (2), der um eine Achse (X) herum drehbeweglich ist,
- mindestens einen Pendelkörper (3), der in Bezug auf den Träger (2) beweglich ist, und,
- mindestens ein Wälzorgan (11), das die Verlagerung des Pendelkörpers (3) in Bezug auf den Träger (2) führt, wobei dieses Wälzorgan (11) mit mindestens einer ersten Wälzbahn (12), die mit dem Träger (2) fest verbunden ist, und mit mindestens einer zweiten Wälzbahn (13), die mit dem Pendelkörper (3) fest verbunden ist, zusammenwirkt,
wobei mindestens eine der ersten (12) und der zweiten (13) Wälzbahnen eine solche Form hat, dass die Bahn des Schwerpunkts des Pendelkörpers (3) bei seiner Verlagerung in Bezug auf den Träger (2) umfasst:
- einen ersten Abschnitt (30), der beidseits einer Ruheposition (P0) angeordnet ist, wobei dieser erste Abschnitt (30) eine Form hat, die das Tilgen eines Ordnungswerts der Drehschwingungen durch den Pendelkörper (3) entlang dieses ersten Abschnitts (30) ermöglicht, und
- zwei zweite Abschnitte (31), die jeweils jenseits eines Endes (P1) des ersten Abschnitts (30) angeordnet sind, wobei jeder zweite Abschnitt (31) eine Form hat, die das Tilgen einer einzigen Frequenz durch den Pendelkörper (3) entlang eines dieser zweiten Abschnitte (31) ermöglicht.

2. Vorrichtung nach Anspruch 1, wobei die Vereinigung des ersten Abschnitts (30) und der zwei zweiten Abschnitte (31) die Bahn des Schwerpunkts des Pendelkörpers (3) bei seiner Verlagerung in Bezug auf den Träger (2) bildet.

3. Vorrichtung nach Anspruch 1 oder 2, wobei die kumulierte Länge der zweiten Abschnitte zwischen 5 % und 30 %, insbesondere zwischen 10 und 30 %, der Gesamtlänge dieser Bahn des Schwerpunkts des Pendelkörpers (3) ausmacht.

4. Vorrichtung nach einem der vorhergehenden Ansprüche, wobei der Übergang zwischen dem ersten Abschnitt und jedem zweiten Abschnitt zweimal ableitbar ist.

5. Vorrichtung nach einem der vorhergehenden Ansprüche, wobei mindestens ein zweiter Abschnitt geradlinig ist.

6. Vorrichtung nach einem der Ansprüche 1 bis 4, wobei mindestens ein zweiter Abschnitt einen maximalen Krümmungsradius hat, der kleiner als der minimale Krümmungsradius des ersten Abschnitts ist.

7. Vorrichtung nach einem der Ansprüche 1 bis 4, wobei mindestens ein zweiter Abschnitt einen Spiralabschnitt definiert.

8. Vorrichtung nach einem der vorhergehenden Ansprüche, wobei jeder zweite Abschnitt eine identische Form hat.

9. Vorrichtung nach einem der vorhergehenden Ansprüche, wobei der Schwerpunkt des Pendelkörpers (3) den ersten Abschnitt (30) und jeden zweiten Abschnitt (31) nur bei einem Geschwindigkeitsbereich durchläuft, der um den Wert der Drehzahl des Trägers (2) zentriert ist, bei dem der Ausschlag des Pendelkörpers maximal ist, wobei die Amplitude dieses Geschwindigkeitsbereichs insbesondere 20 % des Werts dieser Drehzahl entspricht.

10. Vorrichtung nach einem der vorhergehenden Ansprüche, wobei es nur einen Träger (2) der Pendeldämpfungsvorrichtung gibt und wobei der Pendelkörper (3) zwei Pendelmassen (5) umfasst, die jeweils axial auf einer Seite des Trägers (2) angeordnet sind, wobei diese beiden Pendelmassen (5) durch mindestens ein Verbindungsorgan (6) untereinander fest verbunden sind, wobei das Wälzorgan (11) auf einer einzigen ersten Wälzbahn (12) und auf einer einzigen zweiten Wälzbahn (13), die durch das Verbindungsorgan (6) definiert wird, wälzt.

11. Vorrichtung nach einem der Ansprüche 1 bis 9, wobei es nur einen Träger (2) der Pendeldämpfungsvorrichtung gibt und wobei der Pendelkörper (3) zwei Pendelmassen (5) umfasst, die jeweils axial auf einer Seite des Trägers (2) angeordnet sind, wobei diese beiden Pendelmassen durch mindestens ein Verbindungsorgan (6) untereinander fest verbunden sind, wobei das Wälzorgan (11) über einen ersten Bereich auf einer einzigen ersten Wälzbahn (12) und über zwei zweite Bereiche auf zwei zweiten Wälzbahnen (13), die jeweils durch eine der Pendelmassen (5) des Pendelkörpers definiert werden, wälzt.

12. Vorrichtung nach einem der vorhergehenden Ansprüche, wobei die erste (12) und die zweite (13) Wälzbahn derartige Formen haben, dass der Pendelkörper (3) in Bezug auf den Träger (2) zugleich verlagert wird:
- translatorisch um eine fiktive Achse herum, die parallel zu der Rotationsachse (X) des Trägers ist, und
- auch rotatorisch um sich selbst.

13. Vorrichtung nach einem der vorhergehenden Ansprüche, wobei mindestens eine der ersten (12) und der zweiten (13) Wälzbahnen, insbesondere jede erste (12) und jede zweite (13) Wälzbahn, umfasst:
- einen ersten Abschnitt, der beidseits einer Ruheposition des Wälzorgans (11) angeordnet ist, wobei dieser erste Abschnitt eine Form hat, die das Tilgen eines Ordnungswerts der Drehschwingungen durch den Pendelkörper (3) ermöglicht, wenn das Wälzorgan (11) entlang dieses ersten Abschnitts wälzt, und
- zwei zweite Abschnitte, die jeweils jenseits eines Endes des ersten Abschnitts angeordnet sind, wobei jeder zweite Abschnitt eine Form hat, die das Tilgen einer Frequenz durch den Pendelkörper (3) ermöglicht, wenn das Wälzorgan (11) entlang eines dieser zweiten Abschnitte wälzt.

14. Bauteil für ein Getriebesystem eines Kraftfahrzeugs, wobei das Bauteil insbesondere ein Zweimassenschwungrad, ein hydrodynamischer Drehmomentwandler, ein mit der Kurbelwelle fest verbundenes Schwungrad, eine nasslaufende oder trockenlaufende Doppelkupplung, eine nasslaufende Einfachkupplung, ein Bauteil eines Hybridantriebs oder eine Reibscheibe ist, umfassend eine Pendeldämpfungsvorrichtung nach einem der vorhergehenden Ansprüche.

## Claims

1. A pendulum damping device (1) comprising:
- a support (2) free to rotate about an axis (X);
- at least one pendulum body (3) that is able to move relative to the support (2); and
- at least one rolling member (11) guiding the movement of the pendulum body (3) relative to the support (2), this rolling member (11) cooperating with at least a first runway track (12) formed as one with the support (2) and with at least one second runway track (13) formed as one with the pendulum body (3),
of the first runway track (12) and second runway track (13) at least one having a shape such that the path of the center of gravity of the pendulum body (3) as it moves with respect to the support (2) comprises:
- a first portion (30) positioned on each side of a rest position (P0), this first portion (30) having a shape enabling the filtering of an order value of the torsional oscillations by the pendulum body (3) along this first portion (30), and
- two second portions (31), each one positioned beyond an end (P1) of the first portion (30), each second portion (31) having a shape enabling the filtering of a unique frequency by the pendulum body (3) along one of these second portions (31).

2. The device as claimed in claim 1, the combination of the first portion (30) and of the two second portions (31) constituting the path of the center of gravity of the pendulum body (3) as it moves with respect to the support (2).

3. The device as claimed in claim 1 or 2, the combined length of the second portions representing between 5% and 30%, notably between 10 and 30%, of the total length of this path of the center of gravity of the pendulum body (3).

4. The device as claimed in any one of the preceding claims, the transition between the first portion and each second portion being doubly differentiable.

5. The device as claimed in any one of the preceding claims, at least one second portion being rectilinear.

6. The device as claimed in any one of claims 1 to 4, at least one second portion having its maximum radius of curvature smaller than the minimum radius of curvature of the first portion.

7. The device as claimed in any one of claims 1 to 4, at least one second portion defining a portion of a spiral.

8. The device as claimed in any one of the preceding claims, each second portion having an identical shape.

9. The device as claimed in any one of the preceding claims, the center of gravity of the pendulum body (3) traveling along the first portion (30) and each second portion (31) only for a range of speeds centered around that value of the rotational speed of the support (2) for which the travel of the pendulum body is a maximum, the amplitude of this range of speeds notably corresponding to 20% of the value of this rotational speed.

10. The device as claimed in any one of the preceding claims, the support (2) of the pendulum damping device being unique and the pendulum body (3) comprising two pendulum masses (5) one axially positioned on each respective side of the support (2), with these two pendulum masses (5) being secured together by at least one linking member (6), the rolling member (11) rolling along a single first runway track (12) and along a single second runway track (13) defined by the linking member (6).

11. The device as claimed in any one of claims 1 to 9, the support (2) of the pendulum damping device being unique and the pendulum body (3) comprising two pendulum masses (5) one axially positioned on each respective side of the support (2), these two pendulum masses being secured together by at least one linking member (6), the rolling member (11) rolling via a first zone along a single first runway track (12) and via two second zones along two second runway tracks (13) respectively defined by one of the pendulum masses (5) of the pendulum body.

12. The device as claimed in any one of the preceding claims, the first (12) and second (13) runway tracks having shapes that are such that the pendulum body (3) is moved relative to the support (2) both:
- in translation about an imaginary axis parallel to the axis of rotation (X) of the support, and
- also in rotation upon itself.

13. The device as claimed in any one of the preceding claims, of the first runway track (12) and the second runway track (13) at least one, notably each first runway track (12) and each second runway track (13) comprising:
- a first portion positioned on each side of a position of rest of the rolling member (11), this first portion having a shape enabling the filtering of an order value of the torsional oscillations by the pendulum body (3) when the rolling member (11) is rolling along this first portion, and
- two second portions, each one positioned beyond an end of the first portion, each second portion having a shape enabling the filtering of a frequency by the pendulum body (3) when the rolling member (1) is rolling along one of these second portions.

14. A component for a motor vehicle transmission system, the component particularly being a dual mass flywheel, a hydrodynamic torque converter, a flywheel secured to the crankshaft, a wet or dry dual clutch, a single wet clutch, a hybrid powertrain component, or a friction disk, comprising a pendulum damping device as claimed in any one of the preceding claims.
